(19) Europäisches Patentamt European Patent Office Office européen des brevets

(11) **EP 3 053 885 B1**

(12) **EUROPEAN PATENT SPECIFICATION**

(45) Date of publication and mention of the grant of the patent:
**02.09.2020 Bulletin 2020/36**

(21) Application number: **14851305.4**

(22) Date of filing: **16.09.2014**

(51) Int Cl.:
*C02F 11/143* *(2019.01)*          *C02F 3/00* *(2006.01)*
*C02F 11/06* *(2006.01)*           *C02F 11/12* *(2019.01)*
*F23G 5/04* *(2006.01)*            *F23G 5/50* *(2006.01)*
*F23G 7/00* *(2006.01)*

(86) International application number:
**PCT/JP2014/074406**

(87) International publication number:
**WO 2015/049978 (09.04.2015 Gazette 2015/14)**

(54) **APPARATUS AND METHOD FOR TREATING ORGANIC WASTE**

VORRICHTUNG UND VERFAHREN ZUR BEHANDLUNG VON BIOMÜLL

APPAREIL ET PROCÉDÉ POUR LE TRAITEMENT DE DÉCHETS ORGANIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2013 JP 2013207128**

(43) Date of publication of application:
**10.08.2016 Bulletin 2016/32**

(73) Proprietor: **Metawater Co., Ltd.**
**Tokyo 101-0041 (JP)**

(72) Inventors:
• **INOUE, Masuo**
  **Tokyo 101-0041 (JP)**
• **GOTOU, Akira**
  **Tokyo 101-0041 (JP)**
• **KAMIYA, Kosuke**
  **Tokyo 101-0041 (JP)**
• **KIMURA, Hideto**
  **Tokyo 101-0041 (JP)**
• **KOYANO, Ayaka**
  **Tokyo 101-0041 (JP)**
• **KAWAMURA, Takahide**
  **Tokyo 101-0041 (JP)**
• **MIZUGUCHI, Naohiro**
  **Tokyo 101-0041 (JP)**
• **KANAGAWA, Takaaki**
  **Tokyo 101-0041 (JP)**

(74) Representative: **Mewburn Ellis LLP**
**Aurora Building**
**Counterslip**
**Bristol BS1 6BX (GB)**

(56) References cited:
**EP-A1- 2 832 703          WO-A1-2013/147256**
**JP-A- 2000 202 495          JP-A- 2001 029 999**
**JP-A- 2002 273 495          JP-A- 2005 321 131**

**Description**

[Technical Field]

The present invention relates to a treatment system and a treatment method for an organic waste.

[Background Art]

Sludge and the like generated from a sewage treatment plant are dehydrated by a sludge dehydrator such as a belt-press type dehydrator or a centrifugal-type dehydrator and adjusted to dehydrated sludge with a predetermined water content. The adjusted dehydrated sludge is incinerated by an incinerator. The predetermined water content is desirably a water content such that auxiliary fuel may not be used in the incinerator, in terms of energy efficiency of the heat operation facility.

Therefore, PTL1 describes a technique for measuring a water content and an organism content of dehydrated sludge in an outlet of a sludge dehydrator such that, even if the organism content of the dehydrated sludge fluctuates, the dehydrated sludge burns with own heat (self-burns) without using auxiliary fuel, calculating a water content satisfying a spontaneous combustion condition on the basis of a combustion curve satisfying the spontaneous combustion condition and the measured organism content, comparing the water content with the measured water content, and setting an optimum dehydration ratio of a sludge dehydrating apparatus.

Incidentally, in the technique described in PTL1, the water content of the dehydrated sludge is adjusted such that the dehydrated sludge changes to a spontaneous combustion state in the incinerator. However, even if the water content of the dehydrated sludge is in the spontaneous combustion state, energy use efficiency of the entire heat operation facility including the dehydrator is not always optimum.

In the technique described in PTL1, a measurement device for measuring an energy related value of an organic waste such as sludge, for example, the water content and the organism content of the dehydrated sludge is separately necessary. Therefore, there is also a demand for a technique that can optimize the energy use efficiency of the entire facility without measuring the energy related value of the organism waste such as the water content and the organism content.

On the other hand, in order to improve the energy use efficiency of the entire facility, if a dehydration assistant such as Polyferric sulfate is added to sludge and the sludge is dehydrated, it is possible to achieve a predetermined dehydration ratio with less energy. Energy for the dehydration decreases. However, there is a problem in that a cost burden due to consumption of a drug with a high unit price such as the Polyferric sulfate occurs. Further, when the sludge added with the dehydration assistant such as the Polyferric sulfate is treated in the incinerator, harmful components in exhaust gas increase because of sulfur and chlorine contained in the dehydration assistant. Therefore, an amount of use of caustic soda in an exhaust gas treatment facility increases. Costs increase in this regard as well.

[Citation List]

[Patent Literature]

[PTL 1] Japanese Patent Application Laid-Open No. 2002-273495

A further relevant document, dealing with controlling the dehydrator in an organic waste treatment facility, is application JP 2001-29999.

[Summary of Invention]

[Technical Problem]

The present invention has been devised in view of the above and it is an object of the present invention to provide a treatment system and a treatment method for an organic waste that can minimize running cost of an entire water-content reduction/heat operation facility in a treatment system without measuring an energy related value of an organic waste to be incinerated.

[Solution to Problem]

In order to solve the problems and achieve the object, a treatment system for an organic waste according to the present invention is a treatment system for an organic waste including:

water-content reducing means for reducing water content of an organic waste;
burning means for burning the organic waste reduced in water content by the water content reducing means using combustion energy and reducing an amount of the organic waste;
combustion energy supplying means for supplying combustion energy other than combustion energy present in the organic waste, to the inside of the burning means; and
energy-supply-operation controlling means for controlling the operation of the combustion energy supplying means so that a supply amount of the combustion energy becomes a supply amount for maintaining the inside of the burning means at a predetermined temperature,
the treatment system performing water-content reduction/heat operation treatment of the organic waste.

The treatment system further includes:

organic-waste-energy estimating means for estimating organic waste energy being the combustion energy present in the organic waste, on the basis of the supply amount of the combustion energy being a result of the control by the energy-supply-operation controlling means;
total-running-cost calculating means for performing measurement of an energy use amount for each of a plurality of used energy elements concerning the water-content reduction/heat operation treatment for the organic waste, measuring a consumption amount of a dehydration assistant in the water content reduction of the organic waste and a consumption amount of an alkaline agent in purification treatment of exhaust gas discharged from the treatment system for the organic waste, multiplying respective measurement values by weighting factors for converting the measurement values into running costs, and performing totalizing of multiplied costs to calculate total running cost;
relation recording means for recording, as a reference relation between the organic waste energy and the total running cost, a correlation between the organic waste energy and the total running cost calculated in advance, a correlation between the organic waste energy and the total running cost obtained by successively applying correction to, according to a correlation between an estimated value of the organic waste energy estimated by the organic-waste-energy estimating means and a calculated value of the total running cost calculated by the total-running-cost calculating means, the correlation between the organic waste energy and the total running cost calculated in advance;
magnitude-relation grasping means for grasping a magnitude relation between an optimum value of the organic waste energy for minimizing the total running cost and the latest estimated value of the organic waste energy, on the basis of the reference relation between the organic waste energy and the total running cost recorded by the relation recording means and a latest estimated value of the organic waste energy estimated by the organic-waste-energy estimating means; and
water-content-reducing-operation controlling means for controlling, on the basis of the magnitude relation between the optimum value of the organic waste energy and the latest estimated value of the organic waste energy grasped by the magnitude-relation grasping means, the operation of the water-content-reducing means such that the estimated value of the organic waste energy, which is to be estimated by the organic-waste-energy estimating means, approaches a value for reducing a difference in magnitude between the estimated value and the optimum value of the organic waste energy.

A treatment method for an organic waste according to the present invention is a treatment method for an organic waste including:

a water-content reducing step for reducing water content of an organic waste with water-content reducing means;
a burning step for burning the organic waste reduced in water content, with burning means using combustion energy and reducing an amount of the organic waste;
an combustion energy supplying step for supplying combustion energy other than combustion energy present in the organic waste, to the inside of the burning means; and
an energy-supply-operation controlling step for controlling supply of the combustion energy to provide a supply amount of the combustion energy for maintaining the inside of the burning means at a predetermined temperature,
the treatment method performing water-content reduction/heat operation treatment of the organic waste.

The treatment method further includes:

an organic-waste-energy estimating step for estimating organic waste energy, which is the combustion energy present in the organic waste, on the basis of the supply amount of the combustion energy, which is a result of the control in the energy-supply-operation controlling step;
a total-running-cost calculating step for performing measurement of an energy use amount for each of a plurality of used energy elements concerning the water-content reduction/heat operation treatment for the organic waste, measuring a consumption amount of a dehydration assistant in the water content reduction of the organic waste and a consumption amount of an alkaline agent in purification treatment of exhaust gas discharged from a treatment system for the organic waste, multiplying respective measurement values by weighting factors for converting the measurement values into running costs, and performing totalizing of multiplied costs to calculate total running cost; a relation recording step for recording, in controlling means as a reference relation between the organic waste energy and the total running cost, a correlation between the organic waste energy and the total running cost calculated in advance, a correlation between the organic waste energy and the total running cost obtained by successively applying correction to, according to a correlation between an estimated value of the organic waste energy estimated in the organic-waste-energy estimating step and a calculated value of the total running cost calculated in the total-running-cost calculating step, the correlation between the organic waste energy and the total running cost calculated in advance;

a magnitude-relation grasping step for grasping a magnitude relation between an optimum value of the organic waste energy for minimizing the total running cost and the latest estimated value of the organic waste energy, on the basis of the reference relation between the organic waste energy and the total running cost recorded in the relation recording step and a latest estimated value of the organic waste energy estimated by the organic-waste-energy estimating means; and

a water-content-reducing-operation controlling step for controlling, on the basis of the magnitude relation between the optimum value of the organic waste energy and the latest estimated value of the organic waste energy grasped in the magnitude-relation grasping step, the operation of the water-content-reducing means such that the estimated value of the organic waste energy, which is to be estimated in the organic-waste-energy estimating step, approaches a value for reducing a difference in magnitude between the estimated value and the optimum value of the organic waste energy.

In the present invention, "water-content reducing means" is a facility for reducing a water content of an organic waste having a high water content such as sludge. A heating drier, a centrifugal dehydrator, and the like are included in the "water-content reducing means".

In the present invention, a "combustion furnace" is means for burning the organic waste with the reduced water content using combustion energy and reducing an amount of the organic waste. An incinerator, a gasifying furnace, a carbonizing furnace, and the like are included in the combustion furnace.

In the present invention, "combustion energy" is energy necessary for burning, gasifying, or carbonizing the organic waste itself and is energy represented by total burning heat of auxiliary fuel - generated moisture evaporation latent heat.

In the present invention, a "used energy element" means all kinds of energy used or generated in the facility of the present invention. Electric power (including power generation), fuel, power, and the like are included in the "used energy element".

[Advantageous Effects of Invention]

With the treatment system and a treatment method for the organic waste and the control device according to the present invention, it is possible to reduce running cost in the entire treatment system to a minimum state.

[Brief Description of Drawings]

[Fig. 1]

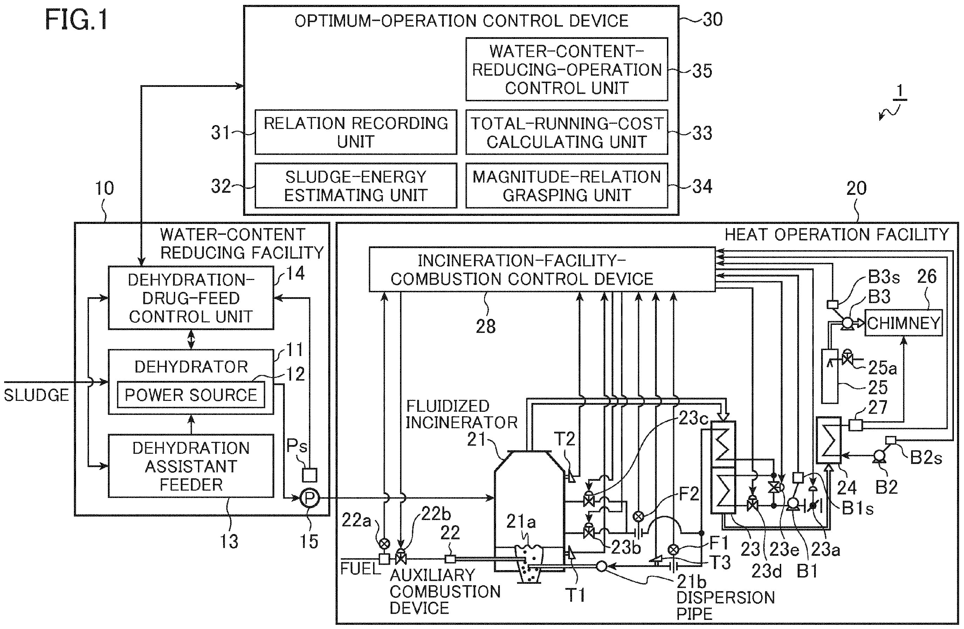

Fig. 1 is a block diagram showing the overall configuration of a treatment system for sludge according to an embodiment of the present invention.
[Fig. 2A]

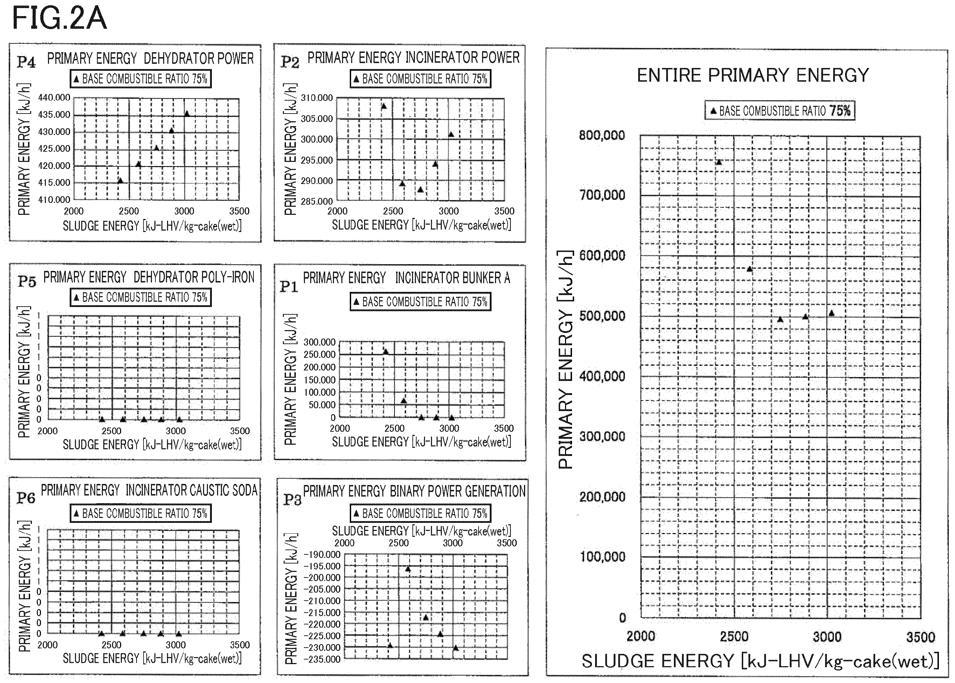

Fig. 2A is an explanatory diagram showing an overview of optimum-operation control processing according to the embodiment of the present invention.
[Fig. 2B]

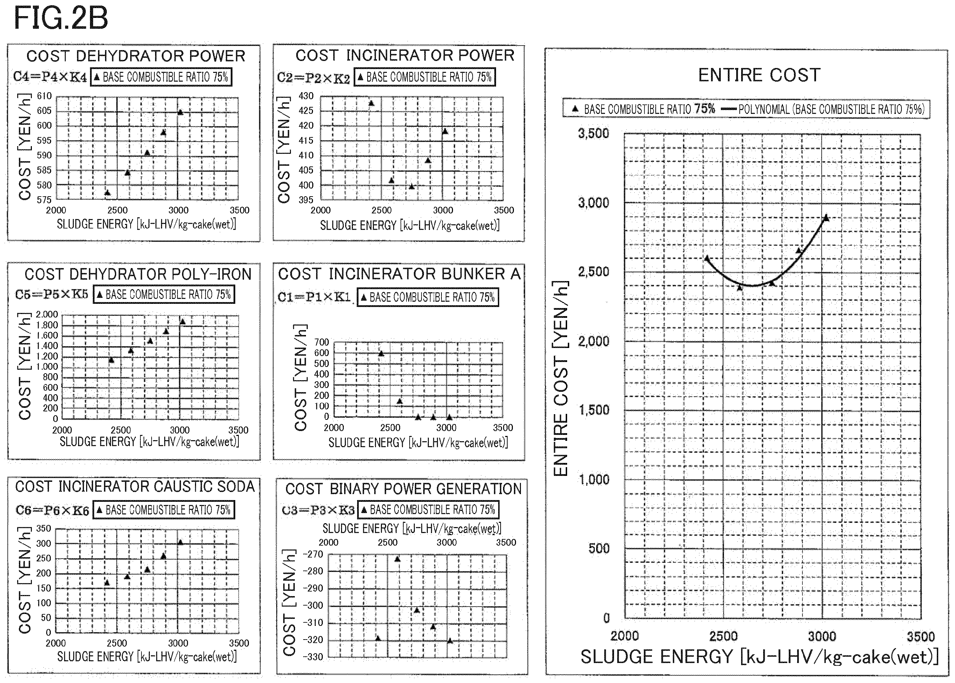

Fig. 2B is an explanatory diagram showing an overview of the optimum-operation control processing according to the embodiment of the present invention.
[Fig. 3]

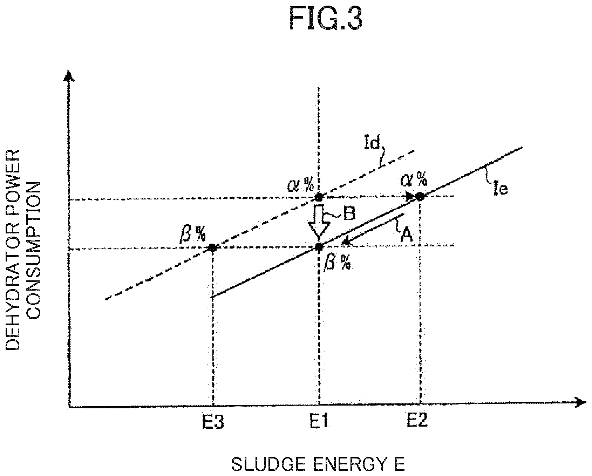

Fig. 3 is a graph showing a relation between power consumption of a water-content reducing facility and sludge energy according to the embodiment of the present invention.
[Fig. 4]

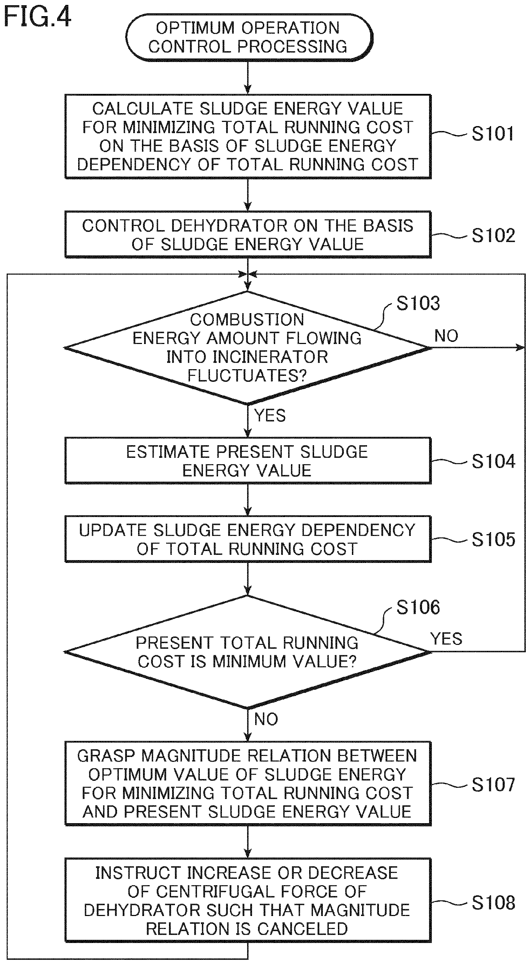

Fig. 4 is a flowchart showing an optimum-operation-control processing method according to the embodiment of the present invention.
[Fig. 5]

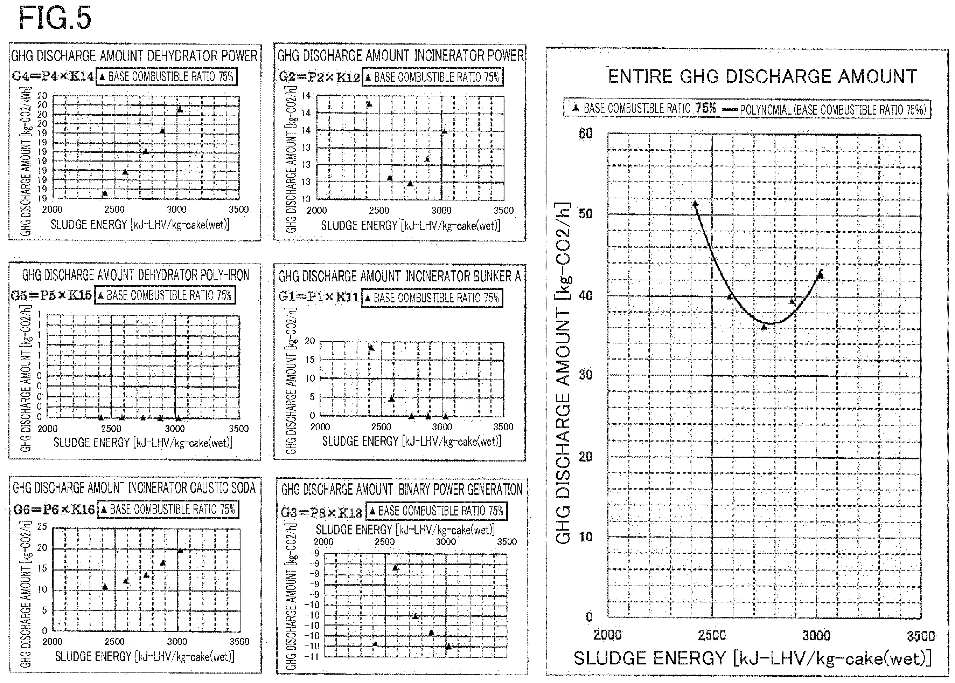

Fig. 5 is an explanatory diagram showing an overview of optimum-operation control processing according to a modification of the embodiment of the present invention.

[Description of Embodiments]

An embodiment of the present invention is explained below with reference to the drawings. Note that, in all the figures of the embodiment explained below, same or corresponding portions are denoted by the same reference numerals and signs. The present invention is not limited by the embodiment explained below.

First, a treatment system for sludge such as sewage, which is a treatment system for an organic waste according to an embodiment of the present invention, is explained. Fig. 1 is a block diagram showing the overall configuration of the treatment system for sludge according to this embodiment. As shown in Fig. 1, a treatment system 1 for sludge including an optimum-operation control system includes a water-content reducing facility 10, a heat operation facility 20, and an optimum-operation control device 30 functioning as a control device.

The water-content reducing facility 10 is configured to be capable of increasing and reducing a water content of sludge serving as an organic waste. The water-content reducing facility 10 includes a dehydrator 11 of a centrifugal type functioning as water-content reducing means for reducing water content of sludge through dehydration and a dehydration/drug-feed control unit 14 . Note that, as the water-content reducing means, it is possible to use a dehydrator that dries sludge to reduce water content and other various devices capable of reducing water content of sludge. The dehydration/drug-feed control unit 14 controls the number of revolutions of a power source 12 in the dehydrator 11, that is, an increase and a decrease in a centrifugal force according to control by a water-content-reducing-operation control unit 35 explained below. The dehydrator 11 may be a dehydrator of another form such as a belt-press type dehydrator or a filter press or may be a dryer that dries sludge to reduce water content. The dehydrator 11 includes a power source 12 such as a motor functioning as a used energy element and a dehydration assistant feeder 13 that feeds a dehydration assistant.

The water-content reducing facility 10 further includes a sludge supply pump 15 functioning as a used energy element, a dehydrated-sludge conveying facility such as a belt conveyor, and a power meter Ps that detects electric power consumed by the dehydrated-sludge conveying facility. In an example shown in Fig. 1, a supply pump 15 is used as the dehydrated-sludge conveying facility. The sludge supply pump 15 supplies sludge dehydrated by the dehydrator 11 to the heat operation facility 20. The power meter Ps detects electric power consumed by the sludge supply pump 15 and inputs the electric power to the dehydration/drug-feed control unit 14.

A feed amount of the drug from the dehydration assistant feeder 13 and a detection value of electric power of the dehydrated-sludge conveying facility such as the belt conveyor not shown in the figure are also input to the dehydration/drug-feed control unit 14. The dehydration/drug-feed control unit 14 outputs an energy use amount of the power source 12 and the power consumption of the sludge supply pump 15 input from the power meter Ps to the optimum-operation control device 30 and controls an increase and a decrease in the number of revolutions of the power source 12 in the dehydrator 11. The coagulant feeder 13 feeds, as the dehydration assistant, a predetermined amount of Polyferric sulfate calculated in advance to dehydration target sludge. Note that a polymeric coagulant can also be used together with the dehydration assistant. Since a molecular coagulant has a relatively low unit price, a predetermined amount of the molecular coagulant may be always added.

The heat operation facility 20 is a heat operation facility that performs heat operation for sludge. The heat operation facility 20 includes a fluidized incinerator 21 functioning as burning means, combustion energy supplying means for supplying combustion energy other than combustion energy present in the sludge to the fluidized incinerator 21, and an incineration-facility-combustion control device 28 functioning as energy-supply-operation controlling means.

The fluidized incinerator 21 burns the sludge reduced in water content by the dehydrator 11 using the combustion energy and reduces an amount of the sludge. The fluidized incinerator 21 includes a free board section and a lower fluidized floor 21a. A dispersion pipe 21b is horizontally inserted into the fluidized floor 21a. Air nozzles are uniformly provided in the dispersion pipe 21b. Air for combustion (fluidized air) is fed to the dispersion pipe 21b. The sludge serving as an organic waste is continuously supplied to the fluidized floor 21a by a sludge supply pump 15. Decomposition, drying, and partial burning advance in the fluidized floor 21a. The sludge is completely burned in the free board section. Combustion gas and ash are discharged from an upper part. In the fluidized incinerator 21, the temperature of the fluidized floor 21a is detected by a temperature sensor T1. The temperature of the upper part in the fluidized incinerator 21 is detected by a temperature sensor T2. Detection results of the temperatures are input to the incineration-facility-combustion control device 28.

An auxiliary combustion device 22 supplies auxiliary fuel serving as combustion energy to the inside of the fluidized incinerator 21. An auxiliary fuel use amount of the auxiliary combustion device 22 functioning as a used energy element is detected by a fuel amount detector 22a. A detection result is input to the incineration-facility-combustion control device 28. Opening control for a supply amount of the auxiliary fuel is performed by a control valve 22b. When the sludge satisfies a spontaneous combustion condition, the auxiliary fuel is not supplied. The detection result of the fuel use amount of the auxiliary fuel is supplied to the incineration-facility-combustion control device 28.

A fluidized air pre-heater 23, which is a used energy element, performs heat exchange of fluidized air fed from the atmosphere by a fluidizing blower B1, a flow rate of which is controlled by a valve 23a, and combustion gas. The fluidized air pre-heater 23 performs the heat exchange of the fluidized air and the combustion gas in towers in an upper stage and a lower stage. In the fluidized air serving as the combustion energy supplied from the fluidized air pre-heater 23 to the fluidized incinerator 21, the temperature is detected by a temperature sensor T3 and the flow rate is detected by flow rate sensors F1 and F2. Detection results of the temperature and the flow rate are respectively input to the incineration-facility-combustion control device 28.

The temperature of the fluidized air is adjusted by changing opening degrees of control valves 23d and 23e provided at a post stage of the fluidizing blower B1. Note that, for the temperature adjustment of the fluidized air, a cooler including a cooling fan may be used. The fluidized air heat-exchanged as explained above is supplied to the fluidized floor 21a through the dispersion pipe 21b and supplied to the fluidized incinerator 21 via the control valves 23b and 23c.

Consequently, an air ratio in the fluidized incinerator 21 is adjusted and the temperature in the fluidized incinerator 21 is adjusted.

The fluidizing blower B1 functioning as a used energy element is controlled by the incineration-facility-combustion control device 28. If the temperature in the fluidized incinerator 21 is optimum, the fluidizing blower B1 consumes substantially fixed minimum power.

On the other hand, when the temperature is low, combustion air for the auxiliary fuel is required. Therefore, power consumption increases. When the temperature in the fluidized incinerator 21 exceeds an optimum state, an amount of combustion gas discharged from the fluidized incinerator 21 also increases. Therefore, power consumptions of the fluidizing blower B1 and a white smoke prevention fan B2 and an induction fan B3 explained below also increase. Note that the power consumptions of the fluidizing blower B1, the white smoke prevention fan B2, and the induction fan B3 functioning as used energy elements are respectively detected by power meters B1s, B2s, and B3s and input to the incineration-facility-combustion control device 28.

Quantities of heat in the auxiliary fuel and the fluidized air change to combustion energy other than combustion energy present in the sludge. Combustion energy supplying means is configured by the auxiliary fuel device 22 including the control valve 22a, the fluidized air pre-heater 23 connected to the fluidizing blower B1, the valve 23a, and the control valves 23b to 23e, and the dispersion pipe 21b.

The flow rate of the fluidized air detected by the flow rate sensors F1 and F2 and the measurement values of the temperature of the fluidized air detected by the temperature sensor T3 are supplied from the incineration-facility-combustion control device 28 to the optimum-operation control device 30. The optimum-operation control device 30 controls the power source 12 of the dehydrator 11 according to an amount of combustion energy supplied to the fluidized incinerator 21 including the flow rate and the temperature of the fluidized air. The water-content reducing facility 10 increases and reduces the number of revolutions of the power source 12 according to the control by the water-content-reducing-operation control unit 35 of the optimum-operation control device 30 and increases and reduces the dehydration assistant with the dehydration assistant feeder 13 to thereby control a water content of the sludge and increase and reduce a sludge energy value. Note that details of the control by the optimum-operation control device 30 are explained below.

The combustion gas heat-exchanged by the fluidized air pre-heater 23 is supplied to a white-smoke-prevention pre-heater 24 at temperature of approximately 500 to 600°C. Heat exchange is performed between white smoke prevention air input from the atmosphere by the white smoke prevention fan B2 functioning as the used energy element and the combustion gas. The heat of the white smoke prevention air heated in the white-smoke-prevention pre-heater 24 is collected via a heat-recovery power generation facility 27 functioning as a used energy element. Thereafter, the white smoke prevention air is supplied to a chimney 26.

On the other hand, the combustion gas output from the white-smoke-prevention pre-heater 24 is subjected to smoke discharge treatment in a scrubber 25 and output to the chimney 26. Note that cleaning liquid containing a drug such as caustic soda for removing harmful gas contained in exhaust gas is added to the scrubber 25 by a control valve 25a. The chimney 26 heats the input combustion gas with the white smoke prevention air sent from the heat-recovery power generation facility 27. The chimney 26 discharges the combustion gas in which white smoke is prevented. The heat-recovery power generation facility 27 functioning as an example of a heat-recovery power generation/power facility including a heat-recovery power facility drives a turbine or the like using the collected heat. The generated electric power is used for the treatment system 1 for sludge and other facilities.

Note that a heat-recovery power generation amount generated by the heat-recovery power generation facility 27 is input to the incineration-facility-combustion control device 28.

The incineration-facility-combustion control device 28 controls the operations of the auxiliary combustion device 22 and the fluidized air pre-heater 23 to maintain a combustion temperature in the inside of the fluidized incinerator 21 at a substantially fixed predetermined temperature, although slight temperature fluctuation occurs. The incineration-facility-combustion control device 28 controls a feed amount of a drug added to the scrubber 25 according to harmful gas concentration in exhaust gas measured by a not-shown gas detector.

Further, the incineration-facility-combustion control device 28 outputs the fuel use amount detected by the fuel amount detector 22a, the power consumptions of the fluidizing blower B1, the white smoke prevention fan B2, and the induction fan B3, the heat-recovery power generation amount by the heat-recovery power generation facility 27, and the drug feed amount to the scrubber 25 corresponding to the harmful gas concentration in the exhaust gas to the optimum-operation control device 30. The incineration-facility-combustion control device 28 adjusts the control valves 23b to 23e and performs combustion control of the sludge on the basis of the detection results of the temperature sensors T1 to T3 and the flow rate sensors F1 and F2.

The optimum-operation control device 30 includes a relation recording unit 31 functioning as relation recording means for recording a relation between an amount of use of sludge energy concerning water-content reduction/heat operation of the sludge and a plurality of energy elements for each of a plurality of elements and a feed amount of a dehydration assistant such as Polyferric sulfate and a feed amount of an alkaline agent such as caustic soda and a correlation between a totalized value (a total energy use amount) in the sludge energy and the used energy elements and the feed amount of the dehydration assistant such as Polyferric sulfate and the feed amount of the alkaline agent such as caustic soda.

The optimum-operation control device 30 includes a sludge-energy estimating unit 32 functioning as sludge-energy estimating means for estimating sludge energy, which is a part of combustion energy present in the sludge, supplied to the fluidized incinerator 21. The sludge-energy estimating unit 32 calculates a sludge energy value from an expression (1) indicating a total quantity of heat in the fluidized incinerator 21 and an expression (2) indicating a total quantity of heat of combustion energy on the basis of a principle that these total quantities of heat are the same. The sludge-energy estimating unit 32 estimates the estimated sludge energy value as a sludge energy value Ees at that point in time.

The total quantity of heat in the fluidized incinerator 21

$$\text{Total quantity of heat} = \text{exhaust gas amount} \times \text{specific heat} \\ \text{of exhaust gas} \times \text{temperature of exhaust gas} \qquad (1)$$

The total quantity of heat by the combustion energy (the energy of the fluidized air, the sludge energy, and the energy of the auxiliary fuel) supplied to the fluidized incinerator 21

$$\text{Total quantity of heat} = \text{mass of sludge} \times \text{sludge energy} \\ \text{(quantity of heat per unit mass)} + \text{mass of auxiliary fuel} \times \text{quantity} \\ \text{of heat per unit mass} + \text{amount of fluidized air} \times \text{specific heat} \\ \text{of fluidized air} \times \text{temperature of fluidized air} \qquad (2)$$

Therefore, the estimated value Ees of the sludge energy is calculated from Expression (1) and Expression (2) as follows:

$$\text{Sludge energy Ees at that point in time} = [(\text{exhaust gas amount}$$

$$\times \text{ specific heat of exhaust gas } (*1) \times \text{temperature of exhaust gas})$$

$$- (\text{mass of auxiliary fuel} \times \text{quantity of heat per unit mass} + \text{amount}$$

$$\text{of fluidized air} \times \text{specific heat of fluidized air } (*2) \times \text{temperature}$$

$$\text{of fluidized air})]/(\text{mass of sludge}).$$

*1 Specific heat of "dry gas" in the exhaust gas, specific heat of "moisture (water steam)", and specific heat calculated from a compounding ratio of the dry gas and the moisture

*2 Specific heat of "dry air" in the air, specific heat of "moisture (water steam)", and specific heat calculated from a compounding ratio of the dry air and the moisture

Note that, in Expression (1) and Expression (2), a heat discharge amount of the fluidized incinerator 21, an oxygen temperature, and the like are calculated as correction values according to necessity.

The sludge energy is calculated as sludge energy = (solid content combustion heat) - (moisture latent heat in sludge + sludge combustible generated moisture latent heat). A total energy use amount has dependency uniquely determined for sludge energy per unit volume and has a minimum value.

On the other hand, the sludge energy per unit volume changes according to a property of the sludge. Moreover, it is difficult to detect a value of the sludge energy and control the sludge energy value. On the other hand, the sludge energy has a monotonous decrease relation with respect to an increase in a water content of the sludge.

Therefore, by increasing and reducing the water content of the sludge, it is possible to reduce and increase the sludge energy value. By increasing and reducing the water content of the sludge making use of this relation, it is possible to control the sludge energy value of the sludge to minimize the total energy use amount. In this case, the water-content reducing facility 10, in particular, the dehydrator 11 and the dehydration assistant feeder 13 are controlled so that the water content of the sludge is increased and reduced such that the total energy use amount converges to the sludge energy value to be minimized.

At this point, it is unnecessary to directly measure the water content of the sludge. Therefore, it is unnecessary to provide a detection system and a control system for the water content of the sludge, a detection system and a control system for the sludge energy value, and the like. A configuration can be simplified.

The optimum-operation control device 30 includes a total-running-cost calculating unit 33 functioning as total-running-cost calculating means for performing measurement of energy use amounts of each of a plurality of used energy elements concerning water-content reduction/heat operation treatment for the sludge and drug feed amounts, multiplying the measured energy use amounts and the measured drug feed amounts by weighting factors for respectively converting the energy use amounts and the drug feed amounts into running costs, and performing totalizing of the multiplied costs to calculate total running cost.

The relation recording unit 31 records, for example, a correlation between the sludge energy and the total running cost shown in Fig. 2B calculated by the optimum-operation control device 30. The relation recording unit 31 records, as a reference relation between the total running cost and the sludge energy, a correlation between the total running cost and the sludge energy updated by successively applying correction to, according to a correlation between the estimated value of the sludge energy estimated by the sludge-energy estimating unit 32 and the total running cost calculated by the total-running-cost calculating unit 33, the calculated correlation between the sludge energy and the total running cost.

Further, the relation recording unit 31 records, without calculating the correlation between the sludge energy and the total running cost shown in Fig. 2B, as a reference relation between the total running cost and the sludge energy, a correlation between the sludge energy and the total running cost obtained by successively applying construction and correction according to a correlation between an estimated value of the sludge energy estimated by the sludge-energy estimating unit 32 and a measured value of the total running cost calculated by the total-running-cost calculating unit 33 from the start of operation of the treatment system 1 for sludge.

The optimum-operation control device 30 includes a magnitude-relation grasping unit 34 that grasps a magnitude relation of the sludge energy value Ees with respect to an optimum value Emin of the sludge energy for minimizing total running cost C, on the basis of the reference relation between the sludge energy and the total running cost recorded in the relation recording unit 31 and the sludge energy value Ees, which is the latest estimated value at the present point in time, estimated by the sludge-energy estimating unit 32.

Further, the optimum-operation control device 30 includes a water-content-reducing-operation control unit 35 for controlling the dehydrator 11 in the water-content reducing facility 10. The water-content-reducing-operation control unit 35 supplies a control signal to the dehydration-drug-feed control unit 14 to thereby control an increase and a decrease in the number of revolutions of the power source 12 in the dehydrator 11, that is, an increase and a decrease in a centrifugal force and control the dehydration assistant feeder 13 to control an increase and a decrease in a water content of the sludge to be subjected to dehydration treatment.

The optimum-operation control device 30 acquires amounts of uses of the present plurality of used energy elements and consumed amounts of drugs such as the fuel use amount, the power consumption, and the feed amounts of the drugs and instructs, on the basis of the reference relation recorded in the relation recording unit 31 and the sludge energy value Ees, which is the latest estimated value, estimated by the sludge-energy estimating unit 32, an increase and a decrease in power consumption of the dehydrator 11 and a feed amount of the dehydration assistant with the water-content-reducing-operation control unit 35 toward an optimum value Elmin of the sludge energy for minimizing the total running cost calculated by the total-running-cost calculating unit 33, that is, toward a value for canceling a magnitude relation between the optimum value Elmin of the sludge energy and the sludge energy value Ees grasped by the magnitude-relation grasping unit 34.

Specifically, in Fig. 2A, the relation recording unit 31 of the optimum-operation control device 30 records a relation of a fuel use amount P1 serving as an amount of use of a used energy element of the auxiliary fuel detected by the fuel amount detector 22a with respect to the sludge energy, a relation of power consumption P2 serving as an amount of use of a used energy element obtained by adding up power consumptions of the fluidizing blower B1, the white smoke prevention fan B2, and the induction fan B3 with respect to the sludge energy, a relation of a heat recovery power generation amount P3 serving as an amount of use of a used energy element of the heat-recovery power generation facility 27 with respect to the sludge energy, and a relation of a power source energy use amount P4 serving as an amount of use of a used energy element of the power source 12 and feed amounts of drugs such as the dehydration assistant and the alkaline agent with respect to the sludge energy and indicates the fuel use amount P1, the power consumption P2, the power source energy use amount P4, a dehydration assistant (Polyferric sulfate) feed amount P5, and an alkaline agent (caustic soda) feed amount P6. The dehydration assistant and the alkaline agent do not consume energy. Therefore, the dehydration assistant and the alkaline agent do not contribute to a total energy amount.

In Fig. 2B, the relation recording unit 31 records a reference relation between total running cost C (=C1+C2+C4+C5+C6-C3) obtained by multiplying P1 to P6 by weighting factors K1 to K6 for respectively converting P1 to P6 into running costs, adding up multiplied fuel cost C1, used power cost C2, dehydrator power cost C4, dehydration assistant consumption cost C5, and alkaline agent consumption cost C6, and subtracting heat recovery power generation cost C3 from the added-up cost and the sludge energy.

Note that, in a relation between the fuel use amount P1 and the sludge energy, a larger sludge energy indicates a spontaneous combustion state in which the fuel use amount P1 is 0. When the sludge energy increases (a water content R decreases), since a combustion temperature rises and a combustion gas temperature rises, a heat recovery amount increases and the heat recovery power generation amount P3 increases. As the sludge energy decreases (the water content R increases), since the number of revolutions of the power source 12 of the dehydrator 11 decreases, the power source energy use amount P4 decreases. Note that the power consumption P2 may be actual power consumption serving as an amount of use of a used energy element from which the heat recovery power generation amount P3 is subtracted in advance before addition. Note that the sludge supply pump 15 may be provided on the heat operation facility 20 side. In this case, the electric energy of the sludge supply pump 15 in the power consumption P2 is input to the incineration-facility-combustion control device 28.

The relations between the fuel use cost C1 and the power use cost C2 and the sludge energy and the relation between the total running cost C and the sludge energy change according to a sludge feed amount fed to the fluidized incinerator 21. A sludge feed amount of a curve L in Fig. 2B is 190 t/day. Therefore, when the sludge feed amount changes, the water-content reducing facility 10 is controlled on the basis of a relation corresponding to the sludge feed amount.

That is, a relation between the total running cost C and the sludge energy variously changes according to a change in the feed amount. Therefore, the optimum-operation control device 30 appropriately applies correction to, on the basis of a correlation between the total running cost C calculated by the total-running-cost calculating unit 33 and the sludge energy value Ees estimated by the sludge-energy estimating unit 32 at that point in time, a relation between the total running cost C and the sludge energy calculated in advance and updates the relation and always updates the reference relation between the total running cost C and the sludge energy. Specifically, sludge feed amounts are further subdivided and various relations between the total running cost C and the sludge energy are stored in the relation recording unit 31 of the optimum-operation control device 30, whereby the relation between the total energy consumption P and the sludge energy can be more finely applied.

Further, even during the operation of the treatment system 1 for sludge, the fuel use amount P1, the power consumption P2, the heat recovery power generation amount P3, the power source energy use amount P4, the dehydration assistant feed amount P5, and the alkaline agent feed amount P6 successively change.

Therefore, the relation between the total running cost C and the sludge energy calculated from these values also successively changes. Therefore, the total-running-cost calculating unit 33 of the optimum-operation control device 30 successively calculates running costs from the fuel use amount P1, the power consumption P2, the heat recovery power generation amount P3, the power source energy use amount P4, the dehydration assistant feed amount P5, and the alkaline agent feed amount P6 and successively calculates the total running cost C. The total-energy-use-amount measuring unit 33 successively updates the graph of the total energy use amount P and the sludge energy with respect to, for example, the curve L indicating the relation between the total energy use amount P and the sludge energy in Fig. 2A initially stored in the relation recording unit 31 and calculates the sludge energy Elmin for minimizing the total running cost C. The relation recording unit 31 updates and records the reference relation between the total running cost C and the sludge energy.

A relation between the power consumption of the water-content reducing facility 10 and sludge energy of dehydrated sludge controlled according to a signal supplied from the water-content-reducing operation control unit 35 is explained. Fig. 3 is a graph showing the relation between the power consumption and the sludge energy. In Fig. 3, it is assumed that a sludge characteristic changes from Id to Ie according to a change in a property of the sludge.

In this case, even when the power consumption in the water-content reducing facility 10 is the same, that is, dehydration treatment for the sludge does not change and a water content is $\alpha\%$, the sludge energy E changes from E1 to E2 when combustibles included in the sludge increase. When desired sludge energy E is E1, it is necessary to reduce the sludge energy E from E2 to E1. In this case, by reducing the power consumption of the dehydrator 11 along an arrow B and reducing a centrifugal force to reduce dehydration efficiency and, as a result, setting the water content to $\beta\%$ higher than $\alpha\%$ ($\alpha<\beta$), it is possible to return the sludge energy E from E2 to E1 along an arrow A.

By controlling the power consumption of the dehydrator 11 and controlling the number of revolutions in this way, it is possible to control an increase and a decrease in the water content of the sludge and control the sludge energy E toward the desired sludge energy E1. Conversely, when the sludge characteristic changes from Ie to Id, according to a process opposite to the process explained above, by performing control for increasing the number of revolutions of the dehydrator 11 and improving the dehydration efficiency, it is possible to control the sludge energy E from E3 to E1.

As explained above, in the water-content reducing facility 10, the water-content-reducing-operation control unit 35 can control an increase and a decrease in the number of revolutions of the power source 12 in the dehydrator 11, that is, an increase and a decrease in a centrifugal force through the dehydration-drug-feed control unit 14 on the basis of the latest estimated value of the sludge energy and control the dehydration assistant feeder 13 to control an increase in a water content of the sludge to be subjected to dehydration treatment. Therefore, it is possible to increase and reduce the sludge energy E according to the sludge characteristic.

(Optimum-operation-control processing method)

An optimum-operation-control processing method by the optimum-operation control device 30 according to the embodiment of the present invention is explained. Fig. 4 is a flowchart showing the optimum-operation-control processing method.

As shown in Fig. 4, in this embodiment, first, the optimum-operation control device 30 calculates, on the basis of the reference relation between the total running cost C and the sludge energy recorded in the relation recording unit 31, assuming that input sludge is standard sludge (the total running cost C takes a minimum value at the sludge energy value E1min), the sludge energy value Elmin for minimizing the total running cost C (step S101) .

Subsequently, the water-content-reducing-operation control unit 35 controls the number of revolutions of the dehydrator 11 and a feed amount of the dehydration assistant in the case of the standard sludge and performs the dehydration treatment on the sludge (step S102).

Subsequently, processing shifts to step S103. The optimum-operation control device 30 determines whether an energy amount (an combustion energy amount) of combustion energy including a flow rate of the auxiliary fuel (an auxiliary fuel use amount) serving as a used energy element supplied into the fluidized incinerator 21 and a flow rate and temperature of the fluidized air supplied into the fluidized incinerator 21 fluctuates (step S103) . Note that, when a cooler for cooling the fluidized air is provided in the heat operation facility 20, in order to perform supply amount control for air for cooling, a supply amount of the air for cooling, electric energy of the cooler, and the like by the supply amount control may be calculated as the combustion energy.

If a combustion energy amount based on the auxiliary fuel and the fluidized air (Yes in step S103), the processing shifts to step S104. In step S104, the sludge-energy estimating unit 32 of the optimum-operation control device 30 calculates and estimates, from a total quantity of heat of combustion energy flowing into the fluidized incinerator 21 and a total quantity of heat of gas discharged from the fluidized incinerator 21, the sludge energy value Ees of the sludge supplied into the fluidized incinerator 21 at that point in time (step S104) . The estimated sludge energy value Ees is stored in a predetermined recording region.

Subsequently, the total-running-cost calculating unit 33 of the optimum-operation control device 30 performs measurement of an energy use amount for each of used energy elements on the basis of data supplied from the units in the treatment system for the sludge and calculates the total running cost C obtained by multiplying energy use amounts by weighting factors K1 to K6 for converting the energy use amounts into running costs, adding up the multiplied fuel cost C1, used power cost C2, dehydrator power cost C4, dehydration assistant consumption cost C5, and alkaline agent consumption cost C6, and subtracting the heat recovery power generation cost C3 from the added-up cost. In step S104, the total-running-cost calculating unit 33 performs interpolation from data in the past and the like on the basis of the latest sludge energy value Ees estimated in step S104 and the total running cost C at that point in time.

Consequently, the total-running-cost calculating unit 33 successively corrects and updates the reference relation between the total running cost C and the sludge energy with respect to the relation between the total running cost C and the sludge energy, which is the correlation calculated in advance shown in Fig. 2B. At this point, an optimum value of the sludge energy (the sludge energy value E1min) for minimizing the total running cost C is also derived. The updated reference relation between the total running cost C and the sludge energy is readably stored in the relation recording unit 31.

Note that, when the correlation between the sludge energy and the total running cost C shown in Fig. 2B is not calculated in advance, the total-running-cost calculating unit 33 successively constructs a relation between the total running cost C and the sludge energy according to a correlation of the estimated value of the sludge energy estimated by the sludge-energy estimating unit 32 and the calculated value of the total running cost calculated by the total-running-cost calculating unit 33 from the start of the operation of the treatment system 1 for sludge. Correction is further applied to the relation, whereby the reference relation between the total running cost C and the sludge energy shown in Fig. 2B is derived.

Thereafter, the optimum-operation control device 30 determines on the basis of the reference relation between the total running cost C and the sludge energy stored in the relation recording unit 31 whether the present total running cost C is a minimum value (step S106).

If the present total running cost C is not the minimum value (No in step S106), the magnitude-relation grasping unit 34 of the optimum-operation control device 30 calculates and grasps a magnitude relation between the estimated value Ees of the sludge energy estimated in step S104 and the optimum value Elmin of the sludge energy derived in step S105 (step S107).

The water-content-reducing-operation control unit 35 of the optimum-operation control device 30 controls the dehydration-drug-feed control unit 14 and controls the dehydrator 11 and a dehydration drug feed amount to thereby perform increase/decrease control of a centrifugal force on the dehydrator 11 such that the estimated sludge energy changes to sludge energy for minimizing the total running cost C, that is, the magnitude relation is canceled (step S108).

Thereafter, the processing shifts to step S103. The processing in steps S103 to S108 explained above is repeated. Note that, in steps S103 to S108, in particular, it is desirable to execute step S103 at a predetermined time interval. As the time interval, it is possible to adopt, for example, a conveyance time of the sludge between the dehydrator 11 and the fluidized incinerator 21. It is possible to set an appropriate time interval according to design of the treatment system 1 for sludge.

Note that, if the combustion energy amount based on the auxiliary fuel and the fluidized air does not fluctuate in step S103 (No in step S102), step S103 is repeated until fluctuation of the combustion energy amount occurs . If the present total running cost C is the minimum value in step S106 (Yes in step S106), the optimum-operation control device 30 directly returns to step S103 without instructing the dehydration-drug-feed control unit 14 to increase or decrease the power consumption.

According to the embodiment of the present invention explained above, the operation control of the water-content reducing facility 10 is performed to have a sludge energy value for minimizing the total running cost C of the entire treatment system 1 for sludge without measuring a water content, combustibles, and the like of the sludge to be burned. Therefore, even when a property of the sludge changes and a sludge characteristic changes, it is possible to always minimize the running cost of the entire treatment system 1 for sludge.

According to the embodiment of the present invention, it is possible to control the total running cost to a minimum according to an increase and a decrease in the number of revolutions of the power source 12 of the dehydrator 11 of the water-content reducing facility 10 and an increase and a decrease in a feed amount of the dehydration assistant in the dehydration assistant feeder 13 such that the total running cost C is always minimized. That is, the sludge energy value Elmin is a value close to a sludge energy value at which a spontaneous combustion state and an auxiliary combustion state are switched. However, the spontaneous combustion state and the auxiliary combustion state are not clearly switched before and after the sludge energy value E1min.

Therefore, even if an operator or the like distinguishes the spontaneous combustion state and the auxiliary combustion state and controls an increase and a decrease in power consumption in the water-content reducing facility 10 with manual work according to the distinction of the states, it is extremely difficult to minimize the total running cost.

On the other hand, according to this embodiment, the sludge energy is estimated and the number of revolutions of the power source 12 of the dehydrator 11 and the feed amount of the dehydration assistant in the dehydration assistant feeder 13 are controlled such that the sludge energy changes toward a direction in which the present total running cost C decreases. It is possible to always minimize the total running cost.

Compared with the related art, it is possible to save a space of the entire facility in the treatment system for an organic waste. That is, in an incinerator such as the conventional fluidized incinerator 21, it is necessary to make it possible to adapt a water content of sludge to a wide range and adapt a heat value in the incinerator to a wide range as well. Therefore, specifications concerning a relation between the water content of the sludge and the heat value in the incinerator need to satisfy the wide ranges. Therefore, the incinerator is inevitably over-engineered.

On the other hand, according to this embodiment, in the incinerator such as the fluidized incinerator 21, it is possible to narrow an adaptive range of the water content of the sludge. It is also possible to narrow an adaptive range of the heat value in the incinerator. Therefore, a range to be satisfied in the relation between the water content of the sludge and the heat value can be reduced in specifications. It is possible to save a space of the entire facility in the treatment system for an organic waste.

The embodiment of the present invention is specifically explained above. However, the present invention is not limited to the embodiment. Various modifications based on the technical idea of the present invention are possible. For example, the numerical values described in the embodiment are only examples. Numerical values different from these numerical values may be used according to necessity.

Specifically, for example, in the embodiment explained above, the optimum-operation control device 30 controls an increase and a decrease in the power consumption of the dehydrator 11 taking into account the electric energy of the sludge supply pump, which is a part of the power consumption P2 and the power source energy use amount P4 on the water-content reducing facility 10 side.

However, the optimum-operation control device 30 may control the dehydrator 11 on the basis of only the used energy element on the heat operation facility 20 side without taking into account the used energy elements on the water-content reducing facility 10 side.

In the embodiment explained above, when energy elements other than the fuel use amount P1, the power consumption P2, the heat recovery power generation amount P3, and the power source energy use amount P4 are used in the treatment system 1 for sludge, the optimum-operation control device 30 only has to perform the control of the dehydrator 11 including a relation between use amounts of the used energy elements and the sludge energy. The use amounts of the used energy elements are, for example, other kinds of fuel use amounts and power consumptions of other facilities.


(Modification)

In this modification, increase/decrease control of a centrifugal force of the dehydrator 11 is performed such that, as shown in Fig. 5, total carbon dioxide emission G obtained by respectively multiplying the fuel use amount P1, the power consumption P2, the heat recovery power generation amount P3, the power source energy use amount P4, the dehydration assistant (Polyferric sulfate) feed amount P5, and the alkaline agent (caustic soda) feed amount P6, which are the use amounts of the used energy elements, by weighting factors K11 to K16 for converting these amounts into carbon dioxide emissions instead of the weighting factors K1 to K6 explained above, adding up multiplied town-gas-derived carbon dioxide emission G1, used-power-derived carbon dioxide emission G2, dehydrator-power-derived carbon dioxide emission G4, dehydration-assistant (Polyferric sulfate) -derived carbon dioxide emission G5, and alkaline agent (caustic soda)-derived carbon dioxide emission G6, and subtracting heat-recovery-power-generation-derived carbon dioxide emission G3 from an added-up amounts is a sludge energy value E2min that takes a minimum value.

Consequently, it is possible to perform optimum control for minimizing carbon dioxide emission of the entire treatment system 1 for sludge.

Note that weighting factors for conversion into energy related categories other than those explained in the modification may be used. For example, weighting factors for conversion into sales price values may be used. Further, since the sale price values can be totalized together with running costs, for example, the sales price values may be converted into electric power selling prices without being converted into heat recovery power generation costs. This is because conversion coefficients are often different for power consumption costs and the electric power selling prices.

In the embodiment and the modification explained above, an optimum state is a minimum state. However, the present invention is not limited to this. The optimum state may be a maximum state.

Note that a state in which the total running costs C and C' and the total carbon dioxide emission G are minimum values is not always a spontaneous combustion state. Sludge energy values corresponding to the minimum values are not always the same.

Further, in the embodiment and the modification explained above, the optimum-operation control device 30 is configured independently from the water-content reducing facility 10 and the heat operation facility 20. However, the present invention is not limited to this. The functions of the optimum-operation control device 30 may be provided on the water-content reducing facility 10 or heat operation facility 20 side.

Note that combinations of two or more of the used energy elements can be optionally set.

In the embodiment explained above, the centrifugal force of the dehydrator is controlled to change the water content of the sludge and control the sludge energy. However, the present invention is not always limited to this. Various kinds of control can be executed if the sludge energy can be changed to increase and decrease . Specifically, it is also possible to adopt a method of increasing and decreasing the sludge energy by directly controlling used electric energy, differential speed, and the like of the dehydrator and a method of instructing a dehydrator including water-content controlling means for controlling the water content of the sludge to perform only an increase and a decrease of the water content and indirectly controlling the water content of the sludge.

In the embodiment explained above, an incinerator of a type other than the fluidized incinerator such as a circulation incinerator may be used as burning means. It is also possible to appropriately select an incinerator such as a gasifying furnace or a carbonizing furnace according to a purpose of heat operation. Note that the heat operation facility 20 is not limited to an incineration facility including an incinerator that performs incineration treatment and may be a facility including a sludge gasifying furnace or a sludge fueling (carbonizing) furnace.

In the embodiment explained above, the heat-recovery power generation facility 27 may directly output, as power, a rotation force of a turbine rotated by energy recovered as heat. Further, the heat-recovery power generation facility 27 may use fluidized air heat-exchanged by the fluidized air pre-heater 23, that is, fluidized air at a pre-stage of the fluidized air pre-heater 23 or may use, as a heat source, fluidized air obtained in parallel to the fluidized air at the pre-stage of the fluidized air pre-heater 23.

[Reference Signs List]

| | |
|---|---|
| 1 | treatment system for sludge |
| 10 | water-content reducing facility |
| 11 | dehydrator |
| 12 | power source |
| 13 | coagulant feeder |
| 14 | dehydration-drug-feed control unit |
| 15 | sludge supply pump |
| 20 | heat operation facility |
| 21 | fluidized incinerator |
| 21a | fluidized floor |
| 21b | dispersion pipe |
| 22 | auxiliary combustion device |
| 22a | fuel amount detector |
| 22b, 23b, 23c, 23d, 23e, 25a | control valve |
| 23 | fluidized air pre-heater |
| 24 | white-smoke-prevention pre-heater |
| 25 | scrubber |
| 26 | chimney |
| 27 | heat-recovery power generation facility |
| 28 | incineration-facility-combustion control device |
| 30 | optimum-operation control device |
| 31 | relation recording unit |
| 32 | sludge-energy estimating unit |
| 33 | total-running-cost calculating unit |
| 34 | magnitude-relation grasping unit |
| 35 | water-content-reducing-operation control unit |
| B1 | fluidizing blower |
| B2 | white smoke prevention fan |
| B3 | induction fan |
| B1s, B2s, B3s, Ps | power meters |
| F1, F2 | flow rate sensor |
| T1, T2, T3 | temperature sensor |

**Claims**

1. A treatment system (1) for an organic waste, comprising:

water-content reducing means (10) including a dehydration assistant feeder (13) for reducing water content of an organic waste;
burning means (21) for burning the organic waste reduced in water content by the water content reducing means (10) using combustion energy and reducing an amount of the organic waste;
combustion energy supplying means (22) for supplying combustion energy other than combustion energy present in the organic waste to an inside of the burning means (21); and
energy-supply-operation controlling means (28) for controlling an operation of the combustion energy supplying means so that a supply amount of the combustion energy becomes a supply amount for maintaining the inside of the burning means at a predetermined temperature;
purification treatment means (25) of exhaust gas from the burning means,
the treatment system performing water-content reduction/heat operation treatment of the organic waste,
the treatment system further comprising:

organic-waste-energy estimating means (32) for estimating organic waste energy being the combustion energy present in the organic waste on the basis of the supply amount of the combustion energy being a result of the control by the energy-supply-operation controlling means (28);
total-running-cost calculating means (33) for performing measurement of an energy use amount for each of a plurality of used energy elements concerning the water-content reduction/heat operation treatment for the organic waste, measuring a consumption amount of a dehydration assistant in the water content reduction of the organic waste and a consumption amount of an alkaline agent in purification treatment of exhaust gas discharged from the treatment system for the organic waste, multiplying respective measurement values by weighting factors for converting the measurement values into running costs, and performing totalizing of multiplied costs to calculate total running cost;
relation recording means (31) for recording, as a reference relation between the organic waste energy and the total running cost, a correlation between the organic waste energy and the total running cost calculated in advance, a correlation between the organic waste energy and the total running cost obtained by successively applying correction to, according to a correlation between an estimated value of the organic waste energy estimated by the organic-waste-energy estimating means (32) and a calculated value of the total running cost calculated by the total-running-cost calculating means (33), the correlation between the organic waste energy and the total running cost calculated in advance;
magnitude-relation grasping means (34) for grasping a magnitude relation between an optimum value of the organic waste energy for minimizing the total running cost and the latest estimated value of the organic waste energy, on the basis of the reference relation between the organic waste energy and the total running cost recorded by the relation recording means (31) and a latest estimated value of the organic waste energy estimated by the organic-waste-energy estimating means (32); and
water-content-reducing-operation controlling means (30) for controlling, on the basis of the magnitude relation between the optimum value of the organic waste energy and the latest estimated value of the organic waste energy grasped by the magnitude-relation grasping means (34), the operation of the water-content-reducing means (10) such that the estimated value of the organic waste energy to be estimated by the organic-waste-energy estimating means (32) approaches a value for reducing a difference in magnitude between the estimated value and the optimum value of the organic waste energy .

2. A treatment method for an organic waste, comprising:

a water-content reducing step for reducing water content of an organic waste with water-content reducing means (10);
a burning step for burning the organic waste reduced in water content, with burning means (21) using combustion energy and reducing an amount of the organic waste;
a combustion energy supplying step for supplying combustion energy other than combustion energy present in the organic waste, to an inside of the burning means (21); and
an energy-supply-operation controlling step for controlling supply of the combustion energy to provide a supply amount of the combustion energy for maintaining the inside of the burning means (21) at a predetermined temperature,
the treatment method performing water-content reduction/heat operation treatment of the organic waste,

the treatment method further comprising:

an organic-waste-energy estimating step for estimating organic waste energy being the combustion energy present in the organic waste on the basis of the supply amount of the combustion energy being a result of the control in the energy-supply-operation controlling step;

a total-running-cost calculating step for performing measurement of an energy use amount for each of a plurality of used energy elements concerning the water-content reduction/heat operation treatment for the organic waste, measuring a consumption amount of a dehydration assistant in the water content reduction of the organic waste and a consumption amount of an alkaline agent in purification treatment of exhaust gas discharged from a treatment system for the organic waste, multiplying respective measurement values by weighting factors for converting the measurement values into running costs, and performing totalizing of multiplied costs to calculate total running cost;

a relation recording step for recording, in controlling means as a reference relation between the organic waste energy and the total running cost, a correlation between the organic waste energy and the total running cost calculated in advance, a correlation between the organic waste energy and the total running cost obtained by successively applying correction to, according to a correlation between an estimated value of the organic waste energy estimated in the organic-waste-energy estimating step and a calculated value of the total running cost calculated in the total-running-cost calculating step, the correlation between the organic waste energy and the total running cost calculated in advance;

a magnitude-relation grasping step for grasping a magnitude relation between an optimum value of the organic waste energy for minimizing the total running cost and the latest estimated value of the organic waste energy, on the basis of the reference relation between the organic waste energy and the total running cost recorded in the relation recording step and a latest estimated value of the organic waste energy estimated by the organic-waste-energy estimating means; and

a water-content-reducing-operation controlling step for controlling, on the basis of the magnitude relation between the optimum value of the organic waste energy and the latest estimated value of the organic waste energy grasped in the magnitude-relation grasping step, the operation of the water-content-reducing means (10) such that the estimated value of the organic waste energy to be estimated in the organic-waste-energy estimating step, approaches a value for reducing a difference in magnitude between the estimated value and the optimum value of the organic waste energy .

## Patentansprüche

1. Aufbereitungssystem (1) für organischen Abfall, wobei das System Folgendes umfasst:

Wassergehaltreduktionsmittel (10), das eine Dehydrierungsunterstützungszufuhrvorrichtung (13) zur Reduktion des Wassergehalts eines organischen Abfalls umfasst;

Brennmittel (21) zum Verbrennen des organischen Abfalls mit durch das Wassergehaltreduktionsmittel (10) reduziertem Wassergehalt unter Nutzung von Verbrennungsenergie und zum Reduzieren der Menge des organischen Abfalls;

Verbrennungsenergiezufuhrmittel (22) zum Zuführen von Verbrennungsenergie, die nicht die in dem organischen Abfall vorhandene Verbrennungsenergie ist, in das Innere des Brennmittels (21); und

Energieversorgungsvorgangssteuermittel (28) zum Steuern eines Vorgangs des Verbrennungsenergiezufuhrmittels, so dass eine Zufuhrmenge der Verbrennungsenergie eine Zufuhrmenge ist, um das Innere des Brennmittels auf einer vorbestimmten Temperatur zu halten,

Reinigungsbehandlungsmittel (25) von Abgas aus dem Brennermittel,

wobei das Aufbereitungssystem eine Wassergehaltreduktions-/Wärmevorgangsbehandlung des organischen Abfalls durchführt,

wobei das Aufbereitungssystem ferner Folgendes umfasst:

Mittel zur Einschätzung der Energie des organischen Abfalls (32) zum Einschätzen der organischen Abfallenergie, die die in dem organischen Abfall vorhandene Verbrennungsenergie ist, auf Grundlage dessen, dass die Zufuhrmenge der Verbrennungsenergie ein Ergebnis der Steuerung durch das Energieversorgungsvorgangssteuermittel (28) ist;

Gesamtbetriebskostenberechnungsmittel (33) zur Durchführung einer Messung einer Energieverbrauchsmenge für jedes aus einer Vielzahl verwendeter Energieelemente in Bezug auf die Wassergehaltreduktion/Wärmevorgangsbehandlung des organischen Abfalls, zur Messung einer Verbrauchsmenge einer Dehydrierungsunterstützungsvorrichtung zur Wassergehaltreduktion des organischen Abfalls und einer Verbrauchsmenge eines alkalischen Mittels in der Reinigungsbehandlung von aus dem Aufbereitungssystem für organischen Abfalls abgegebenen Abgas, wobei entsprechende Messwerte mit Gewichtungsfaktoren multipliziert werden, um die Messwerte in Betriebskosten umzuwandeln, und eine Summierung der multiplizierten Kosten zur Berechnung der Gesamtbetriebskosten durchgeführt wird;

Verhältnisaufzeichnungsmittel (31) zur Aufzeichnung als Referenzverhältnis zwischen der organischen Abfallenergie und den Gesamtbetriebskosten einer Korrelation zwischen der organischen Abfallenergie und den vorab berechneten Gesamtbetriebskosten, einer Korrelation zwischen der organischen Abfallenergie und den Gesamtbetriebskosten, die dadurch erhalten wird, dass gemäß einer Korrelation zwischen einem geschätzten Wert der organischen Abfallenergie, der durch das Mittel zur Einschätzung der Energie des organischen Abfalls (32) eingeschätzt wird, und einem berechneten Wert der Gesamtbetriebskosten, die durch das Mittel zur Berechnung der Gesamtbetriebskosten (33) berechnet wird, die Korrelation zwischen der organischen Abfallenergie und den vorab berechneten Gesamtbetriebskosten angewandt wird;

Größenverhältniserfassungsmittel (34) zur Erfassung eines Größenverhältnisses zwischen einem Optimalwert der organischen Abfallenergie zum Minimieren der Gesamtbetriebskosten und des letzten geschätzten Werts der organischen Abfallenergie auf Grundlage des Referenzverhältnisses zwischen der organischen Abfallenergie und den Gesamtbetriebskosten, das durch das Verhältnisaufzeichnungsmittel (31) aufgezeichnet wurde, und einem letzten geschätzten Wert der organischen Abfallenergie, der durch das Mittel zur Einschätzung der Energie des organischen Abfalls (32) eingeschätzt wurde; und

Wassergehaltreduktionsvorgangssteuermittel (30) zum Steuern des Betriebs des Wassergehaltreduktionsmittels (10) auf Grundlage des Größenverhältnisses zwischen dem Optimalwert der organischen Abfallenergie und dem letzten geschätzten Wert der organischen Abfallenergie, das durch das Größenverhältniserfassungsmittel (34) erfasst wurde, so dass sich der geschätzte Wert der organischen Abfallenergie, der durch das Mittel zur Einschätzung der Energie des organischen Abfalls (32) eingeschätzt werden soll, einem Wert annähert, um eine Größendifferenz zwischen dem geschätzten Wert und dem optimalen Wert für organische Abfallenergie zu reduzieren.

2. Behandlungsverfahren für einen organischen Abfall, wobei das Verfahren Folgendes umfasst:

einen Wassergehaltreduktionsschritt zum Reduzieren des Wassergehalts eines organischen Abfalls mit einem Wassergehaltreduktionsmittel (10);

einem Verbrennungsschritt zum Verbrennen des organischen Abfalls, der im Wassergehalt reduziert ist, mit Brennmitteln unter Verwendung von Verbrennungsenergie und des Reduzierens einer Menge des organischen Abfalls;

einen Verbrennungsenergiezufuhrschritt zum Zuführen von Verbrennungsenergie, die nicht die in dem organischen Abfall vorhandene Verbrennungsenergie ist, in das Innere eines Brennmittels (21); und

einen Energiezufuhrvorgangssteuerschritt zum Steuern der Zufuhr von Verbrennungsenergie zur Bereitstellung einer Zufuhrmenge der Verbrennungsenergie, um das Innere des Brennmittels (21) auf einer vorbestimmten Temperatur zu halten,

wobei das Behandlungsverfahren eine Wassergehaltreduktions-/Wärmebehandlung des organischen Abfalls durchführt,

wobei das Behandlungsverfahren ferner Folgendes umfasst:

einen Schritt des Einschätzens organischer Abfallenergie zum Einschätzen der organischen Abfallenergie, bei der es sich um die in dem organischen Abfall vorhandenen Verbrennungsenergie handelt, auf Grundlage der Zufuhrmenge an Verbrennungsenergie, die das Ergebnis der Steuerung in dem Energiezufuhrvorgangssteuerschritt ist;

einen Schritt der Berechnung der Gesamtbetriebskosten zur Durchführung einer Messung einer Energieverbrauchmenge für jedes aus einer Vielzahl eingesetzter Energieelemente in Zusammenhang mit der Wassergehaltreduktions-/Wärmebehandlung für den organischen Abfall, zur Messung einer Verbrauchsmenge einer Dehydrierungsunterstützungsvorrichtung zur Wassergehaltreduktion des organischen Abfalls und einer Verbrauchsmenge eines alkalischen Mittels in der Reinigungsbehandlung von aus dem Aufbereitungssystem für organischen Abfalls abgegebenen Abgas, wobei entsprechende Messwerte mit Gewichtungsfaktoren multipliziert werden, um die Messwerte in Betriebskosten umzuwandeln, und eine Summierung der multiplizierten Kosten zur Berechnung der Gesamtbetriebskosten durchgeführt wird;

einen Schritt zur Aufzeichnung von Verhältnissen zur Aufzeichnung in dem Steuermittel als Referenzverhältnis zwischen der organischen Abfallenergie und den Gesamtbetriebskosten einer Korrelation zwischen der organischen Abfallenergie und den vorab berechneten Gesamtbetriebskosten, einer Korrelation zwischen der organischen Abfallenergie und den Gesamtbetriebskosten, die dadurch erhalten wird, dass gemäß einer Korrelation zwischen einem geschätzten Wert der organischen Abfallenergie, der durch das Mittel zur Einschätzung der Energie des organischen Abfalls eingeschätzt wird, und einem berechneten Wert der Gesamtbetriebskosten, die durch das Mittel zur Berechnung der Gesamtbetriebskosten berechnet wird, sukzessive eine Korrektur angewandt wird auf die Korrelation zwischen der organischen Abfallenergie und den vorab berechneten Gesamtbetriebskosten;

einen Schritt zur Erfassung eines Größenverhältnisses zur Erfassung eines Größenverhältnisses zwischen einem Optimalwert der organischen Abfallenergie zum Minimieren der Gesamtbetriebskosten und des letzten geschätzten Werts der organischen Abfallenergie auf Grundlage des Referenzverhältnisses zwischen der organischen Abfallenergie und den Gesamtbetriebskosten, das in dem Verhältnisaufzeichnungsschritt aufgezeichnet wurde, und einem letzten geschätzten Wert der organischen Abfallenergie, der durch das Mittel zur Einschätzung der Energie des organischen Abfalls eingeschätzt wurde; und

einen Schritt zur Steuerung eines Wassergehaltreduktionsvorgangs zum Steuern des Betriebs des Wassergehaltreduktionsmittels (10) auf Grundlage des Größenverhältnisses zwischen dem Optimalwert der organischen Abfallenergie und dem letzten geschätzten Wert der organischen Abfallenergie, das durch in dem Schritt zur Größenverhältniserfassung erfasst wurde, so dass sich der geschätzte Wert der organischen Abfallenergie, der im Schritt zur Einschätzung der organischen Abfallenergie eingeschätzt werden soll, einem Wert annähert, um eine Größendifferenz zwischen dem geschätzten Wert und dem optimalen Wert für organische Abfallenergie zu reduzieren.

## Revendications

1. Système de traitement (1) pour un déchet organique, comprenant :

un moyen de réduction de teneur en eau (10) incluant un module d'alimentation d'assistant de déshydratation (13) pour réduire une teneur en eau d'un déchet organique ;

un moyen de combustion (21) pour brûler le déchet organique dont la teneur en eau a été réduite par le moyen de réduction de teneur en eau (10), en utilisant une énergie de combustion, et pour réduire une quantité du déchet organique ;

un moyen de fourniture d'énergie de combustion (22) pour fournir de l'énergie de combustion, autre que l'énergie de combustion présente dans le déchet organique, vers l'intérieur du moyen de combustion (21) ; et

un moyen de commande d'opération de fourniture d'énergie (28) pour commander une opération du moyen de fourniture d'énergie de combustion de sorte qu'une quantité de fourniture de l'énergie de combustion devient une quantité de fourniture pour maintenir l'intérieur du moyen de combustion à une température prédéterminée ;

un moyen de traitement de purification (25) de gaz d'échappement provenant du moyen de combustion ;

le système de traitement mettant en œuvre un traitement de réduction de teneur en eau / d'opération de chauffage du déchet organique ;

le système de traitement comprenant en outre :

un moyen d'estimation d'énergie de déchet organique (32) pour estimer une énergie de déchet organique, correspondant à l'énergie de combustion présente dans le déchet organique, sur la base de la quantité de fourniture de l'énergie de combustion résultant de la commande mise en œuvre par le moyen de commande d'opération de fourniture d'énergie (28) ;

un moyen de calcul de coût total de fonctionnement (33) pour mettre en œuvre une mesure d'une quantité d'utilisation d'énergie pour chaque élément d'une pluralité d'éléments d'énergie utilisée concernant le traitement de réduction de teneur en eau / d'opération de chauffage pour le déchet organique, mesurer une quantité de consommation d'un assistant de déshydratation dans le cadre de la réduction de teneur en eau du déchet organique, et une quantité de consommation d'un agent alcalin dans le cadre d'un traitement de purification de gaz d'échappement déchargé à partir du système de traitement pour le déchet organique, multiplier des valeurs de mesure respectives par des facteurs de pondération afin de convertir les valeurs de mesure en des coûts de fonctionnement, et mettre en œuvre une totalisation des coûts multipliés en vue de calculer un coût total de fonctionnement ;

un moyen d'enregistrement de relations (31) pour enregistrer, en tant qu'une relation de référence entre l'énergie de déchet organique et le coût total de fonctionnement, une corrélation entre l'énergie de déchet organique et le coût total de fonctionnement calculé au préalable, une corrélation entre l'énergie de déchet organique et le coût total de fonctionnement, obtenue en appliquant successivement une correction, selon une corrélation entre une valeur estimée de l'énergie de déchet organique estimée par le moyen d'estimation d'énergie de déchet organique (32) et une valeur calculée du coût total de fonctionnement calculé par le moyen de calcul de coût total de fonctionnement (33), à la corrélation entre l'énergie de déchet organique et le coût total de fonctionnement calculé au préalable ;

un moyen de saisie de relation de grandeur (34) pour saisir une relation de grandeur entre une valeur optimale de l'énergie de déchet organique pour minimiser le coût total de fonctionnement et la valeur estimée la plus récente de l'énergie de déchet organique, sur la base de la relation de référence entre l'énergie de déchet organique et le coût total de fonctionnement, enregistrée par le moyen d'enregistrement de relations (31), et d'une valeur estimée la plus récente de l'énergie de déchet organique estimée par le moyen d'estimation d'énergie de déchet organique (32) ; et

un moyen de commande d'opération de réduction de teneur en eau (30) pour commander, sur la base de la relation de grandeur entre la valeur optimale de l'énergie de déchet organique et la valeur estimée la plus récente de l'énergie de déchet organique saisie par le moyen de saisie de relation de grandeur (34), l'opération du moyen de réduction de teneur en eau (10), de sorte que la valeur estimée de l'énergie de déchet organique devant être estimée par le moyen d'estimation d'énergie de déchet organique (32) s'approche d'une valeur pour réduire une différence de grandeur entre la valeur estimée et la valeur optimale de l'énergie de déchet organique.

2. Procédé de traitement pour un déchet organique, comprenant :

une étape de réduction de teneur en eau consistant à réduire une teneur en eau d'un déchet organique par le biais d'un moyen de réduction de teneur en eau (10) ;

une étape de combustion consistant à brûler le déchet organique dont la teneur en eau a été réduite, par le biais d'un moyen de combustion (21), en utilisant une énergie de combustion, et à réduire une quantité du déchet organique ;

une étape de fourniture d'énergie de combustion consistant à fournir de l'énergie de combustion, autre que l'énergie de combustion présente dans le déchet organique, vers l'intérieur du moyen de combustion (21) ; et

une étape de commande d'opération de fourniture d'énergie consistant à commander la fourniture de l'énergie de combustion en vue de fournir une quantité de fourniture de l'énergie de combustion pour maintenir l'intérieur du moyen de combustion (21) à une température prédéterminée ;

le procédé de traitement mettant en œuvre un traitement de réduction de teneur en eau / d'opération de chauffage du déchet organique ;

le procédé de traitement comprenant en outre :

une étape d'estimation d'énergie de déchet organique consistant à estimer une énergie de déchet organique, correspondant à l'énergie de combustion présente dans le déchet organique, sur la base de la quantité de fourniture de l'énergie de combustion résultant de la commande mise en œuvre à l'étape de commande d'opération de fourniture d'énergie ;

une étape de calcul de coût total de fonctionnement consistant à mettre en œuvre une mesure d'une quantité d'utilisation d'énergie pour chaque élément d'une pluralité d'éléments d'énergie utilisée concernant le traitement de réduction de teneur en eau / d'opération de chauffage pour le déchet organique, mesurer une quantité de consommation d'un assistant de déshydratation dans le cadre de la réduction de teneur en eau du déchet organique, et une quantité de consommation d'un agent alcalin dans le cadre d'un traitement de purification de gaz d'échappement déchargé à partir d'un système de traitement pour le déchet organique, multiplier des valeurs de mesure respectives par des facteurs de pondération afin de convertir les valeurs de mesure en des coûts de fonctionnement, et mettre en œuvre une totalisation de coûts multipliés en vue de calculer un coût total de fonctionnement ;

une étape d'enregistrement de relations consistant à enregistrer, dans un moyen de commande, en tant qu'une relation de référence entre l'énergie de déchet organique et le coût total de fonctionnement, une corrélation entre l'énergie de déchet organique et le coût total de fonctionnement calculé au préalable, une corrélation entre l'énergie de déchet organique et le coût total de fonctionnement, obtenue en appliquant successivement une correction, selon une corrélation entre une valeur estimée de l'énergie de déchet organique estimée à l'étape d'estimation d'énergie de déchet organique et une valeur calculée du coût total de fonctionnement calculé à l'étape de calcul de coût total de fonctionnement, à la corrélation entre l'énergie de déchet organique et le coût total de fonctionnement calculé au préalable ;

une étape de saisie de relation de grandeur consistant à saisir une relation de grandeur entre une valeur optimale de l'énergie de déchet organique pour minimiser le coût total de fonctionnement et la valeur estimée la plus récente de l'énergie de déchet organique, sur la base de la relation de référence entre l'énergie de déchet organique et le coût total de fonctionnement, enregistrée à l'étape d'enregistrement de relations, et d'une valeur estimée la plus récente de l'énergie de déchet organique estimée par le moyen d'estimation d'énergie de déchet organique ; et

une étape de commande d'opération de réduction de teneur en eau consistant à commander, sur la base de la relation de grandeur entre la valeur optimale de l'énergie de déchet organique et la valeur estimée la plus récente de l'énergie de déchet organique saisie à l'étape de saisie de relation de grandeur, l'opération du moyen de réduction de teneur en eau (10), de sorte que la valeur estimée de l'énergie de déchet organique devant être estimée à l'étape d'estimation d'énergie de déchet organique s'approche d'une valeur pour réduire une différence de grandeur entre la valeur estimée et la valeur optimale de l'énergie de déchet organique.

FIG.1

EP 3 053 885 B1

# FIG.2A

# FIG.2B

COST DEHYDRATOR POWER
$C4=P4\times K4$ ▲ BASE COMBUSTIBLE RATIO 75%
COST [YEN/h] vs SLUDGE ENERGY [kJ-LHV/kg-cake(wet)]

COST INCINERATOR POWER
$C2=P2\times K2$ ▲ BASE COMBUSTIBLE RATIO 75%
COST [YEN/h] vs SLUDGE ENERGY [kJ-LHV/kg-cake(wet)]

COST DEHYDRATOR POLY-IRON
$C5=P5\times K5$ ▲ BASE COMBUSTIBLE RATIO 75%
COST [YEN/h] vs SLUDGE ENERGY [kJ-LHV/kg-cake(wet)]

COST INCINERATOR BUNKER A
$C1=P1\times K1$ ▲ BASE COMBUSTIBLE RATIO 75%
COST [YEN/h] vs SLUDGE ENERGY [kJ-LHV/kg-cake(wet)]

COST INCINERATOR CAUSTIC SODA
$C6=P6\times K6$ ▲ BASE COMBUSTIBLE RATIO 75%
COST [YEN/h] vs SLUDGE ENERGY [kJ-LHV/kg-cake(wet)]

COST BINARY POWER GENERATION
$C3=P3\times K3$ ▲ BASE COMBUSTIBLE RATIO 75%
SLUDGE ENERGY [kJ-LHV/kg-cake(wet)]
COST [YEN/h]

ENTIRE COST
▲ BASE COMBUSTIBLE RATIO 75% — POLYNOMIAL (BASE COMBUSTIBLE RATIO 75%)
ENTIRE COST [YEN/h] vs SLUDGE ENERGY [kJ-LHV/kg-cake(wet)]

EP 3 053 885 B1

# FIG.3

FIG.4

$\left(\begin{array}{c}\text{OPTIMUM OPERATION}\\\text{CONTROL PROCESSING}\end{array}\right)$

CALCULATE SLUDGE ENERGY VALUE
FOR MINIMIZING TOTAL RUNNING COST
ON THE BASIS OF SLUDGE ENERGY
DEPENDENCY OF TOTAL RUNNING COST — S101

CONTROL DEHYDRATOR ON THE BASIS
OF SLUDGE ENERGY VALUE — S102

COMBUSTION
ENERGY AMOUNT FLOWING
INTO INCINERATOR
FLUCTUATES? — S103

NO

YES

ESTIMATE PRESENT SLUDGE
ENERGY VALUE — S104

UPDATE SLUDGE ENERGY DEPENDENCY
OF TOTAL RUNNING COST — S105

PRESENT TOTAL RUNNING
COST IS MINIMUM VALUE? — S106

YES

NO

GRASP MAGNITUDE RELATION BETWEEN
OPTIMUM VALUE OF SLUDGE ENERGY
FOR MINIMIZING TOTAL RUNNING COST
AND PRESENT SLUDGE ENERGY VALUE — S107

INSTRUCT INCREASE OR DECREASE
OF CENTRIFUGAL FORCE OF
DEHYDRATOR SUCH THAT MAGNITUDE
RELATION IS CANCELED — S108

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002273495 A

- JP 2001029999 A